**Europäisches Patentamt**

**European Patent Office**

**Office européen des brevets**

(19)

(11) Veröffentlichungsnummer : **0 215 014
B1**

(12)                    **EUROPÄISCHE PATENTSCHRIFT**

(45) Veröffentlichungstag der Patentschrift :
03.01.90

(21) Anmeldenummer : 86901062.9

(22) Anmeldetag : 29.01.86

(86) Internationale Anmeldenummer :
PCT/EP 86/00038

(87) Internationale Veröffentlichungsnummer :
WO/8604525 (14.08.86 Gazette 86/18)

(51) Int. Cl.$^5$ : **B 01 J 23/76**, B 01 D 53/36

(54) Herstellungsverfahren für einen Katalysator.

(30) Priorität : 07.02.85 DE 3504122

(43) Veröffentlichungstag der Anmeldung :
25.03.87 Patentblatt 87/13

(45) Bekanntmachung des Hinweises auf die Patenterteilung : 03.01.90 Patentblatt 90/01

(84) Benannte Vertragsstaaten :
CH FR GB IT LI NL SE

(56) Entgegenhaltungen :
DE—A— 2 739 466
FR—A— 2 174 958
FR—A— 2 269 374
US—A— 3 931 393
US—E—    27 296

(73) Patentinhaber : KOCH, Christian
Mühlweg 13
D-8570 Pegnitz (DE)

(72) Erfinder : KOCH, Christian
Mühlweg 13
D-8570 Pegnitz (DE)

(74) Vertreter : Czowalla, Ernst et al
Patentanwälte E. Czowalla P. Matschkur Dr.-Kurt-
Schumacher-Strasse 23 Postfach 9109
D-8500 Nürnberg 11 (DE)

## Beschreibung

Die Erfindung bezieht sich auf ein Herstellungsverfahren für einen Katalysator zur Umwandlung von Kohlenwasserstoffen, Stickoxiden und Brenngasen, insbesondere zur katalytischen und adsorptiven Nachreinigung von Abgasen aus Dieselmotoren, bestehend aus $LaCoO_3$, den Stabilisatoren Thoriumoxid und Lanthanoxid und dergleichen aktive Komponenten, die als katalytische Beschichtung auf einen wabenförmigen Keramikkörper aufgebracht sind.

Mit Hilfe solcher Katalysatoren werden unverbrannte Kohlenwasserstoffe umgewandelt, verbrannt oder zur Reduktion von Stickoxiden katalysiert, und Stickoxide auch mit anderen brennbaren Gasen, wie Ammoniak oder Wasserstoff reduziert. Solche Katalysatoren beruhen auf der Wirkung von Thoriumoxid als Katalysator-Stabilisator bei der Herstellung von katalytischen Schichten. Katalysatoren auf der Basis von Edelmetallen, Metalloxiden und insbesondere auf der Basis von Metallverbindungsoxiden, wie $LaCoO_3$, benötigen für eine lange Lebensdauer und die Erhaltung der Aktivität bzw. als Schutz gegen Veränderungen chemischer Art durch andere aktive Schichten, wie Wash-Coat und seine Spurenverunreinigungen, spezielle Stabilisatoren. Eine überraschende und entscheidende Rolle geht von dem Thoriumoxid aus, welches in einer speziellen Zusammensetzung mit den Komponenten Lanthanoxid und $LaCoO_3$ eine besonders wirksame Katalysator-Substanz ergibt. Diese katalytische Wirkung wird ohne die Beteiligung des Thoriumoxids an dem Katalysatorkomplex nicht erreicht.

Als besondere Anwendung eines solchen Katalysators ergibt sich sein Einsatz als Abgaskatalysator für Dieselmotoren, der die unverbrannten Teile, insbesondere Ruß und unverbrannten Kohlenwasserstoffe als Reduktionsmittel für die Stickoxidreduktion verwendet. Die unverbrannten Komponenten werden dabei mit dem Sauerstoffüberschuß des Abgases und dem Sauerstoff der Stickoxide verbrannt und so unschädlich gemacht.

Aus dem Stand der Technik nach dem Dokument FR-A-2 269 374 geht hervor, bei einem Katalysator auf oxidischem Trägermaterial als aktive Komponenten neben den Oxiden der Metalle Lanthan, Kobalt, Nickel und Uran noch zusätzlich Oxide der Metalle Cer und Thorium aufzubringen. Das oxidische Trägermaterial soll gleichzeitig oder aufeinanderfolgend mit Lösungen thermisch leicht zersetzbarer Salze imprägniert und calciniert werden. Lanthan und Thorium wird dabei in Form von Nitraten in das poröse Katalysator-Trägermaterial eingebracht. Dieses Dokument verweist auf das weitere Dokument FR-A-2 174 958, nach welchem ein katalytisch aktiver Körper als Katalysator ein mit Nickeloxid und Uranoxid dotiertes $LaCoO_3$ enthält. Zudem ist der Hinweis entnehmbar, Lanthan, Kobalt usw. in Form von Nitraten in den Katalysator-Träger einzubringen.

Ohne die vorherige Bildung des Katalysator-Komplexes wird die katalytische Wirkung des Katalysators durch Bildung von Kobaltaluminat und anderen Nebenreaktionen beeinträchtigt. Bei Anwesenheit von Schwefelkomponenten ist allein das $LaCoO_3$ in der Lage, seine katalytische Wirkung zu behalten. Diesen Problemen wird bei einem Herstellungsverfahren mit den eingangs genannten Merkmalen im Falle eines oxidischen Keramikkörpers erfindungsgemäß dadurch begegnet, daß als aktive Komponente separat hergestelltes $LaCoO_3$ im säureangelösten Zustand auf den Keramikkörper aufgetragen wird, und daß als weitere Komponente noch Ceroxid im Massenverhältnis 0,2 bis 2 zum Thoriumoxid hinzugegeben wird. In Weiterbildung dieser ersten Erfindungsalternative kann vorher oder gleichzeitig der Keramikkörper mit einem porenauffüllenden Wash-Coat aus Oxidkeramik beschichtet werden, der 1-10 Massenprozente Thorium und Lanthan enthält im Verhältnis der beiden Komponenten von 20-80 %, insbesondere 1 Massenteil Thorium zu 4 Massenteile Lanthan bis 4 Massenteile Thorium zu 1 Massenteil Lanthan. Im Falle von wabenförmigen, nichtoxidischen Keramikkörpern, wie beispielsweise Silikat, besteht eine zweite Erfindungsalternative darin, daß als aktive Komponente separat hergestelltes $LaCoO_3$ im säureangelösten Zustand auf den Keramikkörper aufgetragen wird, daß vorher oder gleichzeitig der Keramikkörper mit einem porenauffüllenden Wash-Coat aus Oxidkeramik beschichtet wird, der 1-10 Massenprozente Thorium und Lanthan enthält im Verhältnis der beiden Komponenten von 20-80 %, insbesondere 1 Massenteil Thorium zu 4 Massenteile Lanthan bis 4 Massenteile Thorium zu 1 Massenteil Lanthan, und daß als weitere Komponente noch Ceroxid im Massenverhältnis 0,2 bis 2 zum Thoriumoxid hinzugegeben wird.

Wegen weiterer vorteilhafter Ausbildungen dieser beiden Erfindungsalternativen wird auf die beigefügten Unteransprüche 4-13 verwiesen.

Erfindungsgemäß wird die Herstellung des Katalysators so vollzogen, daß auf den keramischen Träger aus stabilen Materialien, wie Cordierit, Zirkonoxid, Aluminium-Magnesiumoxid-Spinell oder Aluminiumoxid ein Gemisch von aktiven Komponenten in 2 oder einer Stufe aufgebracht werden.

Bei der zweistufigen Auftragung wird in der 1. Stufe ein Gemisch von leicht zersetzlichen Lanthan- und Thoriumsalzen, beispielsweise Nitraten oder Acetaten gegebenenfalls in einer Suspension von sauer angelösten Aluminiumoxid, Magnesium-Aluminiumoxid, Thoriumoxid, Zirkonoxid oder anderen aktiven Trägermaterialien auf den keramischen Träger aufgetragen. Eine Zugabe von Cersalzen führt bei verschiedenen Anwendungen zu leichten weiteren Verbesserungen.

Die Zugabe aller anderen bekannten Salze verschlechtert die Haltbarkeit und die katalytische Aktivität so beträchtlich, daß auf eine entspre-

2

chende Reinheit der Stoffe, insbesondere hinsichtlich von Alkalien geachtet werden muß. In der 2. Stufe wird dann nur ein Gemisch von $LaCoO_3$ in saurer Lösung von Salpetersäure, Essigsäure oder anderen organischen Säuren zusammen mit dem jeweiligen Salz des Thoriums, wie beispielsweise Thoriumnitrat oder dem sauer angelösten Thoriumoxid, aufgebracht.

Zwischen beiden Vorgängen liegt der Einbrenn- und Zersetzungsvorgang, der verhindert, daß die 2. Tränkung zum Herauslösen der Stoffe der 1. Tränkung führt.

Alternativ dazu kann der Vorgang auch in einer Stufe vollzogen werden, wobei alle Stoffe in einer Lösunz bzw. Suspension vermischt auf den keramischen Körper aufgetragen, werden. Welche Zusammensetzung der Lösung gewählt wird hinsichtlich der. Zugabe von oxidkeramischen Stoffen hängt von der Zusammensetzung der Keramik ab. Keramiken, wie Silikate, erfordern die Zugabe von oxidkeramischen Stoffen. Oxidkeramische Träger kommen Ohne diese Zugaben aus.

Bezogen auf einen silikatischen Träger ergeben sich folgende wirksame Bereiche der Zusammensetzung der Komponenten: Oxidkeramische Stoffe als Oxide oder leicht zersetzliche Salze 60 bis 95 %, $LaCoO_3$ 4 bis 30 % Thoriumoxid 1 bis 5 %, Lanthanoxid 1 bis 9 % und andere Komponenten, wie Ceroxid ca. 1 bis 5 %.

Im Vergleich zu der Masse an keramischer Grundsubstanz ist die aufgetragenen Substanz 6 bis 12 %, wobei von einer Porosität bzw. Wasseraufnahme der Grundsubstanz von 20 bis 50 % ausgegangen wird.

Bezogen auf einen oxidischen Träger ergibt sich eine Zugabe an aktiver Substanz in Form von sauer angelösten Oxiden oder leicht zersetzlichen Salzen der Stoffe $LaCoO_3$, Thoriumoxid, Lanthanoxid und anderen Oxiden, wie beispielsweise Ceroxid von insgesamt 0,1 bis 3 %. Der Gehalt an Thoriumoxid ist dabei im Vergleich zu dem $LaCoO_3$ 1 bis 10 %. Das Verhältnis Thoriumoxid zu Lanthanoxid ist 1 zu 1 bis 1 zu 10. Die Zugabe von anderen Stoffen, wie Ceroxid ist dabei etwa in der Größenordung von 20-200 % vom Thoriumoxid.

Bei der Zugabe des Thoriumoxides in 2 Stufen, wie bereits beschrieben ist die Aufteilung im Verhältnis 50 bis 90 % der Substanz in der 1. Stufe.

Die aktive Substanz, das $LaCoO_3$, wird nun erfindungsgemäß nicht als Salze der Einzelkomponenten zugegeben, sondern vorher in einem Brennprozeß gebildet, als Komplex in Lösung gebracht und entweder gemeinsam mit dem Wash-Coat aufgetragen oder in einem anschließenden Prozeß aufgetränkt und gebrannt, bzw. aktiviert.

Vorteil bei der gemeinsamen Auftragung von $LaCoO_3$ und Wash-Coat ist die verbesserte Wirkung der beiden Zusatzkomponenten des Wash-Coates als korngrenzenstabilisierende Komponenten des Katalysatorkomplexes und der Verhinderung der chemischen Auflösung des Katalysatorkomplexes bei dem Imprägniervorgang.

Ohne die vorherige Bildung des Katalysatorkomplexes wird die katalytische Wirkung des Katalysators durch Bildung von Kobaltaluminat und anderen Nebenreaktionen beeinträchtigt. Bei Anwesenheit von Schwefelkomponenten ist allein das $LaCoO_3$ in der Lage, seine katalytische Wirkung zu behalten. Dabei eignen sich als Wash-Coat-Grundsubstanzen besonders die Materialien Magnesium-Aluminium-Spinell, Thoriumoxid und Zirkonoxid.

Mit dem so ausgebildeten Katalysator lassen sich sowohl die Stickoxidanteile eines Rauchgases unter Zugabe von brennbaren Gaskomponenten reduzieren als auch Verbrennungsvorgänge beschleunigen. So kann ein Gas- Luft-Gemisch mit geringem Heizwert in einem solchen Katalysator verbrannt werden, wobei ein Verbrennungsvolumen von nur wenigen Prozenten gegenüber dem Flammenvolumen benötigt wird.

Ohne die aktive Komponente $LaCoO_3$ ist ein so gebildeter Katalysator in der Lage eine Verbrennung von 1 200 °C und höher zu katalysieren, wie sie bei dem Projekt stickoxidfreie Wärmeerzeugung aus Kohle (SOFWE) benötigt wird. Bei so hohen Temperaturen muß auf die Komponente $LaCoO_3$ verzichtet werden, da sie sich dabei zersetzen kann. Ein solcher Katalysator ist bereits vor der Stufe der Zugabe von der $LaCoO_3$-haltigen Lösung fertig präpariert zum Brennen.

In einem nachfolgenden Ausführungsbeispiel soll die Erfindung näher erläutert werden.

Ein Cordierit-Wabenkörper mit quadratischer Geometrie der Anströmfläche von 200 x 200 mm und einer Länge von 500 mm, Strömungskanälen von 5 x 5 mm und einer Stegbreite von 0,5 mm wird mit dem erfindungsgemäßen Katalysator beschichtet.

Der Keramikkörper hat eine Wasseraufnahme von 35 %. Er wird in eine Lösung aus 5-n-Salpetersäure eingetaucht, in der die erfindungsgemäßen Substanzen sich bei Raumtemperatur befinden. In der Suspension der Flüssigkeit, deren Grundlage die 5-n-Salpetersäure ist, befinden sich die aktiven Komponenten von 90 % Aluminium-Magnesium-Oxid-Spinell, 8 % $LaCoO_3$, 1 % Lanthannitrat und 1 % Thoriumnitrat.

Der Körper wird nach dem Tränken, bei dem er eine Gewichtszunahme von 30 % erfährt, bei 600 °C für 6 Stunden gebrannt und anschließend bei 500 °C mit Formiergas eine halbe Stunde behandelt. Er behält eine Gewichtszunahme von 8 %. In der so behandelten Form wird er für die Reduktion von Stickoxiden oder für die Verbrennung von Gas niedrigen Heizwertes bei der 2. Brennkammer des stickodidfreien Kraftwertes (SOFWE) eingesetzt.

In einem weiteren Ausführungbeispiel soll die Erfindung näher erläutert werden.

Ein stranggezogener Wabenkörper aus Cordierit mit den Abmessungen 100 x 100 x 1000 mm, einer Lochgröße von 4 x 4 mm und einer Stegbreite zwischen den Kanälen von 1 mm wird mit einem Wash-Coat, bestehend aus 20 Teilen fein gemahlenen Aluminium-Magnesium-Oxid-Spinell, 1 Teil Thoriumnitrat- und 1 Teil Lanthannitrat in einer 4-n-Salpetersäure von 78 Massenteilen eingerührt.

Die entstandene Mischung wird ca. 1 Stunde gerührt und je nach Porosität des Grundkörpers gegebenenfalls weiter verdünnt. Der Cordieritkörper wird seitlich mit einem Mundstück versehen und die Wash-Coat-Flüssigkeit durch den auf ca. 100 °C vorgewärmten Körper hindurchgezogen. Die Temperatur, der Wash-Coat-Flüssigkeit ist dabei am Eingang etwa Raumtemperatur.

Nach Trocknen des Körpers wird dieser im Ofen bei 1000 °C gebrannt. In den Kanälen des Körpers bleibt dann etwa eine Oberflächenschicht von 0,1 mm und in der Porosität des Cordieritkörpers füllt sich etwa die Porenstruktur zu 20 vol.-% mit Wash-Coat.

Die aktive Substanz wird vorbereitet, indem die Salze der beiden Komponenten La und Co durch Auflösen und Brennen der Lösung im stöchiometrischen Verhältnis des Komplexes $LaCoO_3$ zu diesem Komplex möglichst vollständig überführt werden. Dabei sind Brenntemperaturen von ca. 1 000 °C und 2-4 Stunden Brenndauer nötig.

Der so gebildete Komplex wird durch Säurebildner, wie Einleiten von $CO_2$ in die Suspension von feingemahlenem $LaCoO_3$ und Wasser oder durch Anlösen von diesem gemahlenem Komplex durch Salpetersäure oder Essigsäure in Lösung gebracht und der beschichtete Körper durch Untertauchen in dieser Lösung mit dieser Substanz getränkt.

Je nach Anwendungsfall wird nun dieser getränkte Körper bei höheren oder tieferen Temperaturen gebrannt und reduziert. Für die DeNOx-Anwendung erreicht man eine entsprechend bessere Selektivität und Aktivität, wenn beim Brennvorgang 500 °C nicht überschritten wird. Für die Anwendung im Bereich von 800 °C kann auch diese Temperatur beim Brennen angewandt werden.

Für den Fall des gemeinsamen Auftragens von Wash-Coat und aktiver Substanz wird auch die Brenntemperatur des einmaligen Brandes entsprechend herabgesetzt.

Insgesamt soll die auf dem Katalysatorkörper aufgetragene aktive Substanz als $LaCoO_3$ gleich oder größer der mit dem Wash-Coat eingebrachten Menge an La und Cer sein. Im Ausführungsbeispiel wurde das Verhältnis 2 Teile $LaCoO_3$ zu 1 Teil La- und Thorium- Gemisch im Verhältnis der beiden Komponenten zueinander von 1 : 1 gewählt.

Damit sind dann insgesamt auf dem Cordierit-Körper bezogen auf die Masse 8 % Wash-Coat mit 0,16 % Thorium und Lanthan und 0,32 % $LaCoO_3$.

## Patentansprüche

1. Herstellungsverfahren für einen Katalysator zur Umwandlung von Kohlenwasserstoffen, Stickoxiden und Brenngasen, insbesondere zur katalytischen und adsorptiven Nachreinigung von Abgasen aus Dieselmotoren, bestehend aus $LaCoO_3$, den Stabilisatoren Thoriumoxid und Lanthanoxid und dergleichen aktive Komponenten, die als katalytische Beschichtung auf einen wabenförmigen, oxidischen Keramikkörper, aufgebracht sind, dadurch gekennzeichnet, daß als aktive Komponente separat hergestelltes $LaCoO_3$ im säureangelösten Zustand auf den Keramikkörper aufgetragen wird und daß als weitere Komponente noch Ceroxid im Massenverhältnis 0,2-2 zum Thoriumoxid hinzugegeben wird.

2. Herstellungsverfahren nach Anspruch 1, dadurch gekennzeichnet, daß vorher oder gleichzeitig der Keramikkörper mit einem porenauffüllenden Wash-Coat aus Oxidkeramik beschichtet wird, der 1-10 Massenprozente Thorium und Lanthan enthält im Verhältnis der beiden Komponenten von 20-80 %, insbesondere 1 Massenteil Thorium zu 4 Massenteile Lanthan bis 4 Massenteile Thorium zu 1 Massenteil Lanthan.

3. Herstellungsverfahren für einen Katalysator zur Umwandlung von Kohlenwasserstoffen, Stickoxiden und Brenngasen, insbesondere zur katalytischen und adsorptiven Nachreinigung von Abgasen aus Dieselmotoren, bestehend aus $LaCoO_3$, den Stabilisatoren Thoriumoxid und Lanthanoxid und dergleichen aktive Komponenten, die als katalytische Beschichtung auf einen wabenförmigen, nicht-oxidischen Keramikkörper, wie beispielsweise Silikat, aufgebracht sind, dadurch gekennzeichnet, daß als aktive Komponente separat hergestelltes $LaCoO_3$ im säureangelösten Zustand auf den Keramikkörper aufgetragen wird, daß vorher oder gleichzeitig der Keramikkörper mit einem porenauffüllenden Wash-Coat aus Oxidkeramik beschichtet wird, der 1-10 Massenprozente Thorium und Lanthan enthält im Verhältnis der beiden Komponenten von 20-80 %, insbesondere 1 Massenteil Thorium zu 4 Massenteile Lanthan bis 4 Massenteile Thorium zu 1 Massenteil Lanthan, und daß als weitere Komponente noch Ceroxid im Massenverhältnis 0,2-2 zum Thoriumoxid hinzugegeben wird.

4. Verfahren nach einem der Ansprüche 1-3, dadurch gekennzeichnet, daß die katalytisch aktiven Komponenten auf den Keramikkörper aufgetragen werden, indem eine Suspension dieser Komponenten als Oxide oder Salze in der sauren Lösung der zu den Salzen gehörigen Säure, wie beispielsweise Salpetersäure, Essigsäure oder anderen organischen Säuren hergestellt und aufgebracht wird.

5. Verfahren nach einem der vorhergehenden Ansprüche, dadurch gekennzeichnet, daß die auf den keramischen Körper aufgetragene katalytische Substanz in einem anschließenden Brennprozeß bei Temperaturen zwischen 400-1 000 °C zersetzt und gegebenenfalls in einem daran anschließenden Aktivierungsprozeß bei etwas abgesenkten Temperaturen um 50-400 °C mit Formiergas reduziert bzw. aktiviert wird.

6. Verfahren nach einem der Ansprüche 1 bis 4, dadurch gekennzeichnet, daß der nicht zum Wabenkeramikkörper gehörende Teil des Katalysators bei einem inaktiven keramischen Körper, wie beispielsweise ein Silikat, 60-95 % oxidkeramische Substanzen, wie Zirkonoxid, Aluminium-Magnesium-Spinell, Aluminiumoxid, Titanoxid oder

Zirkonoxid, 4-30 % LaCoO₃, 1-5 % Thoriumoxid, 1-9 % Lanthanoxid und evtl. 0-5 % andere Komponenten wie Ceroxid enthält und die Gesamtmasse des Auftrages nach anschließenden, zersetzenden Brennprozessen bei Temperaturen zwischen 400-1 000 °C 6-12 % beträgt.

7. Verfahren nach einem der Ansprüche 1 bis 4, dadurch gekennzeichnet, daß die nicht-keramische Substanz bei einem oxidkeramischen Körper 0,1-4 Gew.-% beträgt mit einer Aufteilung der aktiven Substanzen der Tränklösung von 20-90 % LaCoO₃, 2-10 % Thoriumoxid, 2-20 % Lanthanoxid und 2-10 % andere Komponenten, wie Ceroxid.

8. Verfahren nach einem der Ansprüche 1 bis 5, dadurch gekennzeichnet, daß die aktiven Komponenten in 2 Stufen aufgetragen werden, wobei in der 1. Stufe die katalytischen Trägersubstanzen und Promotoren, wie oxidkeramische Werkstoffe, Lanthanoxide oder -salze und ein Teil des Thoriumoxids oder -salzes und in der 2. Stufe nach einem Brennprozeß des LaCoO₃ mit einem 2. Teil des Thoriumoxids oder -salzes aufgetränkt wird, wobei das Verhältnis des Thoriumoxidgehaltes der 1. und 2. Stufe 1 : 1 bis 5 : 1 gewählt werden kann.

9. Verfahren nach einem der Ansprüche 1 bis 7, dadurch gekennzeichnet, daß der Keramikkörper eine Porosität von 10-55 % bezogen auf dessen Wasseraufnahme besitzt.

10. Verfahren nach einem der Ansprüche 1 bis 9, dadurch gekennzeichnet, daß der Wash-Coat vorwiegend aus den oxidkeramischen Stoffen Aluminium-Magnesium-Spinell, Titanoxid und/oder Zirkonoxid besteht.

11. Verfahren nach einem der Ansprüche 1 bis 7, dadurch gekennzeichnet, daß die aktiven Komponenten aus 8-30 % Thoriumoxid oder Ceroxid, 8-30 % Lanthanoxid und 30-84 % LaCoO₃ bestehen.

12. Verfahren nach einem der vorhergehenden Ansprüche, dadurch gekennzeichnet, daß die aktive Substanz als LaCoO₃ durch vorheriges Brennen von Einzelsubstanzen, Feinmahlen des Oxides und anschließendes saures Anlösen, beispielsweise in Essigsäure oder Salpetersäure, gebildet und aufgetragen wird.

13. Verfahren nach einem der vorhergehenden Ansprüche, dadurch gekennzeichnet, daß das Auftragen des Wash-Coates auf den keramischen Körper so geschieht, daß der keramische Körper auf ca. 100 °C erhitzt und der bei Raumtemperatur befindliche Katalysator durch Auflösen der Oxide und Nitrate der Aluminium-, Magnesium-, Titan- und Zirkonverbindungen, gegebenenfalls Spinelle, in einer sauren Lösung, wie beispielsweise Salpetersäure oder Essigsäure, erfolgt und dieser Suspension die Cer und Lanthansalze in dem beschriebenen Verhältnis zugemischt werden.

## Claims

1. A process for the production of a catalyst for the conversion of hydrocarbons, oxides of nitrogen and combustion gases, in particular for the catalytic and adsorptive after-purification of exhaust gases from Diesel engines, comprising LaCoO₃, the stabilisers thorium oxide and lanthanum oxide and similar active components, which are deposited on a honeycombed oxidic ceramic body as a catalytic coating, characterised in that LaCoO₃ separately made as an active component in acid solution is applied to the ceramic body and that cerium oxide is added as an additional component to the thorium oxide in the proportion of 0.2-2 by weight.

2. A process according to Claim 1, characterised in that the ceramic body is coated beforehand or at the same time with a pore-filling wash-coat of ceramic oxide which contains 1 to 10 percent by weight of thorium and lanthanum, the two components being in the proportion of 20-80 %, more particularly 1 part by weight of thorium to 4 parts of lanthanum up to 4 parts by weight of thorium to 1 part of lanthanum.

3. A process for the production of a catalyst for the conversion of hydrocarbons, oxides of nitrogen and exhaust gases, in particular for the catalytic and adsorptive after-purification of exhaust gases from diesel engines, comprising LaCoO₃, the stabilisers thorium oxide and lanthanum oxide and similar active components, which are deposited on a honeycombed non-oxidic ceramic body, for example a silicate, characterised in that LaCoO₃ separately made as an active component in acid solution is applied to the ceramic body, and that beforehand or at the same time the ceramic body is coated with a pore-filling wash-coat of ceramic oxide which contains 1 to 10 percent by weight of thorium and lanthanum, the two components being in the proportion of 20-80 %, more particularly 1 part by weight of thorium to 4 parts of lanthanum up to 4 parts by weight of thorium to 1 part of lanthanum, and that cerium oxide is added as an additional component to the thorium oxide in the proportion by weight of 0.2-2.

4. A process according to any of Claims 1 to 3, characterised in that the catalytically active components are applied to the ceramic body, whereby a suspension of these components is produced and deposited as oxides or salts in solution of the acids corresponding to the salts, for example nitric acid, acetic acid or another organic acid.

5. A process according to any of the preceding Claims, characterised in that the catalytic substance applied to the ceramic body is decomposed in a subsequent combustion process at a temperature between 400 and 1 000 °C and if necessary is reduced or activated in a subsequent activation process at a somewhat lower temperature of 50 to 400 °C with forming gas.

6. A process according to any of Claims 1 to 4, characterised in that the part of the catalyst not belonging to the honeycombed ceramic body contains on an inactive ceramic body, such as a silicate 60-95 % of oxidic ceramic substances, e. g. zirconium oxide, aluminium magnesium spinel, aluminium oxide, titanium dioxide, or zirconium oxide, 4 to 30 % $LaCoO_3$, 1 to 5 % thorium oxide. 1 to 9 % lanthanum oxide, and if desired 0 to 5 % of other components such as cerium oxide and the entire mass of the deposit amounts to 6 to 12 % after the subsequent decomposition process at temperatures between 400 and 1 000 °C.

7. A process according to any of Claims 1 to 4, characterised in that the non-ceramic substance comprises 0.1 to 4 percent by weight in an oxidic ceramic body with a proportion of active substances in the aqueous solution of 20 to 90 % $LaCoO_3$, 2 to 10 % thorium oxide, 2 to 20 % lanthanum oxide and 2 to 10 % of other components such as cerium oxide.

8. A process according to any of Claims 1 to 5, characterised in that the active components are applied in two stages, whereby in the first stage the catalytic carrier substance and promoters, e. g. ceramic oxide raw material, lanthanum oxide or salts and a part of the thorium oxide or salt, and in the second stage after a combustion process the $LaCoO_3$ is absorbed with a second part of the thorium oxide or salt, so that the proportion of thorium oxide in steps 1 and 2 can be selected in the range 1 : 1 to 5 : 1.

9. A process according to any of Claims 1 to 7, characterised in that the ceramic body has a porosity of 10 to 55 % relative to its water uptake.

10. A process according to any of Claims 1 to 9, characterised in that the wash-coat comprises mainly the ceramic oxide materials aluminium magnesium spinel, titanium dioxide and/or zirconium oxide.

11. A process according to any of Claims 1 to 7, characterised in that the active components comprise 8 to 30 % thorium oxide or cerium oxide, 8 to 30 % lanthanum oxide and 30 to 84 % $LaCoO_3$.

12. A process according to any of the preceding Claims, characterised in that the active substance is formed and applied as $LaCoO_3$ by the previous combustion of individual substances, finely ground oxides followed by solution in acid, for example acetic acid or nitric acid.

13. A process according to any of the preceding Claims. characterised in that the deposition of the wash-coat on the ceramic body takes place in such a way that the ceramic body is heated to about 100 °C and when at room temperature the catalyst is formed by dissolving oxides and nitrates of aluminium, magnesium, titanium, and zirconium compounds, and spinels if desired, in nitric acid or acetic acid, and this suspension is mixed with the cerium and lanthanum salts in the proportion herein described.

## Revendications

1. Procédé de préparation d'un catalyseur pour transformer des hydrocarbures, des oxydes de l'azote et des gaz combustibles, en particulier pour la post-épuration catalytique et par adsorption de gaz d'échappement de moteurs diesel, le catalyseur consistant en $LaCoO_3$, et en oxyde de thorium et en oxyde de lanthane comme stabilisants et en composants actifs analogues, qui sont appliqués comme revêtement catalytique sur un corps formé d'oxyde céramique en nid d'abeilles, procédé caractérisé en ce qu'on applique sur le corps en matière céramique, comme composant actif, du $LaCoO_3$ préparé séparément, à l'état de solution dans un acide, et en ce qu'on introduit comme composant supplémentaire de l'oxyde de cérium selon un rapport en masse de 0,2 à 2 par rapport à l'oxyde de thorium.

2. Procédé de préparation selon la revendication 1, caractérisé en ce que le corps en matière céramique est revêtu, au préalable ou en même temps, d'un revêtement par voie humide d'oxyde céramique de remplissage des pores, qui contient 1 à 10 % en masse de thorium et de lanthane avec un rapport entre les deux composants allant de 20 à 80 %, en particulier 1 partie en masse de thorium pour 4 parties en masse de lanthane à 4 parties en masse de thorium pour 1 partie en masse de lanthane.

3. Procédé de préparation d'un catalyseur pour transformer des hydrocarbures, des oxydes de l'azote et des gaz de combustion, en particulier pour la post-épuration catalytique et par adsorption de gaz d'échappement de moteurs diesel, catalyseur consistant en $LaCoO_3$, en oxyde de thorium et en oxyde de lanthane comme stabilisants et en composants actifs analogues, qui sont appliqués comme revêtement catalytique sur un corps en matière céramique en nid d'abeilles, mais pas constitué par des oxydes, par exemple du silicate, procédé caractérisé en ce qu'on applique sur le corps en matière céramique, comme composant actif, du $LaCoO_3$ préparé séparément à l'état dissous dans un acide, en ce qu'on revêt, au préalable ou en même temps, le corps de matière céramique à l'aide d'un revêtement, par voie humide, l'oxyde céramique pour le remplissage des pores contenant 1 à 10 % en masse de thorium et de lanthane selon un rapport entre les deux composants de 20 à 80 %, en particulier 1 partie en poids ou en masse de thorium pour 4 parties en masse de lanthane jusqu'à 4 parties en masse de thorium pour 1 partie en masse de lanthane, et en ce qu'on introduit, comme autre composant, encore de l'oxyde de cérium selon un rapport en masse de 0,2 à 2 par rapport à l'oxyde de thorium.

4. Procédé selon l'une des revendications 1 à 3, caractérisé en ce qu'on applique sur le corps en matière céramique les composants à activité catalytique, en préparant une suspension de ces composants sous forme d'oxydes ou de sels dans la solution acide de l'acide correspondant aux sels, comme par exemple l'acide nitrique, l'acide acétique ou d'autres acides organiques, et en ce qu'on applique la suspension ainsi obtenue.

5. Procédé selon l'une des revendications précédentes, caractérisé en ce que la substance catalytique, appliquée sur le corps en matière céramique, est décomposée, dans un processus de calcination subséquente, à des températures comprises entre 400 et 1 000 °C et est ensuite éventuellement réduite ou activée à l'aide d'un gaz de formage ou d'activation au cours du processus subséquent d'activation effectué à des températures un peu réduites de 50 à 400 °C.

6. Procédé selon l'une des revendications 1 à 4, caractérisé en ce que la partie du catalyseur n'appartenant pas au corps de matière céramique en nid d'abeilles contient, dans le cas d'un corps en matière céramique inactive comme par exemple un silicate, 60 à 95 % de substances formées par des oxydes céramiques, comme de l'oxyde de zirconium, du spinelle d'aluminium et de magnésium, de l'oxyde d'aluminium, de l'oxyde de titane ou de l'oxyde de zirconium, 4 à 30 % de LaCoO$_3$, 1 à 5 % d'oxyde de thorium, 1 à 9 % d'oxyde de lanthane et éventuellement 0 à 5 % d'autres composants comme de l'oxyde de cérium, et en ce que la masse totale de la substance appliquée représente 6 à 12 % après des processus subséquents de décomposition par calcination à des températures comprises entre 400 et 1 000 °C.

7. Procédé selon l'une des revendications 1 à 4, caractérisé en ce que la substance non céramique représente, dans le cas d'un corps formé par des oxydes céramiqués, 0,1 à 4 % en poids avec une répartition de substances actives de la solution d'imprégnation de 20 à 90 % de LaCoO$_3$, 2 à 10 % d'oxyde de thorium, 2 à 20 % d'oxyde de lanthane et 2 à 10 % d'autres composants, comme l'oxyde de cérium.

8. Procédé selon l'une des revendications 1 à 5, caractérisé en ce que les composants actifs sont appliqués en deux étapes, et, dans la première étape, les substances de support catalytique et de promoteurs, comme des matériaux formés par des oxydes céramiques, des oxydes de lanthane ou des sels de lanthane et 1 partie de l'oxyde ou du sel de thorium sont appliqués et, dans la deuxième étape, après un processus de calcination du LaCoO$_3$, on applique par imprégnation une seconde partie de l'oxyde de thorium ou du sel de thorium, le rapport entre l'oxyde de thorium dans la première étape et dans la seconde étape pouvant être choisi à 1 : 1 jusqu'à 5 : 1.

9. Procédé selon l'une des revendications 1 à 7, caractérisé en ce que le corps de substance céramique présente une porosité de 10 à 55 %, sur la base de l'absorption d'eau.

10. Procédé selon l'une des revendications 1 à 9, caractérisé en ce que le revêtement par voie humide (« Wash-Coat ») consiste surtout en substances qui sont des oxydes céramiques : spinelle d'aluminium et de magnésium, oxyde de titane et/ou oxyde de zirconium.

11. Procédé selon l'une des revendications 1 à 7, caractérisé en ce que les composants actifs consistent en 8 à 30 % d'oxyde de thorium ou d'oxyde de cérium, 8 à 30 % d'oxyde de lanthane et 30 à 84 % de LaCoO$_3$.

12. Procédé selon l'une des revendications précédentes, caractérisé en ce que la substance active est formée et appliquée sous forme de LaCoO$_3$, par calcination préliminaire des substances individuelles, broyage fin de l'oxyde puis dissolution en milieu acide, par exemple dans de l'acide acétique ou de l'acide nitrique.

13. Procédé selon l'une des revendications précédentes, caractérisé en ce qu'on effectue l'application du revêtement par voie humide sur le corps en matière céramique, en chauffant le corps en matière céramique jusqu'à environ 100 °C et en ce qu'on obtient le catalyseur se trouvant à la température ambiante en dissolvant les oxydes et nitrates des composés d'aluminium, de magnésium, de titane et de zirconium, éventuellement du spinelle, dans une solution acide comme par exemple l'acide nitrique ou l'acide acétique, et en ajoutant en mélangeant à cette suspension les sels de cérium et de lanthane selon le rapport décrit.